# EUROPEAN PATENT APPLICATION

(11) **EP 4 574 601 A1**
(43) Date of publication of application: **25.06.2025**
(21) Application number: 23220063.4
(22) Date of filing: 22.12.2023
(51) Int. Cl.: B60W 30/02, B60W 50/14, B60W 30/04, B60W 40/04, B60W 40/068, B60W 40/13, B60W 50/00

(54) **HANDLING A STABILITY RISK OF A VEHICLE**

(71) Applicant: VOLVO TRUCK CORPORATION, 405 08 Göteborg (SE)
(72) Inventor: HENDERSON, Leon, 438 92 Härryda (SE); SADEGHI KATI, Maliheh, 433 51 Öjersjö (SE); NI, Lei, 417 67 Göteborg (SE)
(74) Representative: Valea AB

(57) **Abstract**

A computer system (1200) comprising processing circuitry (1202) configured to handle a stability risk of a vehicle (1) is provided. The processing circuitry (1202) is configured to predict a first vehicle motion of the vehicle (1) and establish a first value indicative of an uncertainty of the predicted first vehicle motion. The first vehicle motion is predicted based on any one or more out of: a traffic situation of a road (10) travelled by the vehicle (1), a driver model configured to predict one or more future inputs of a driver of the vehicle (1), an estimation of a driving environment of the vehicle (1), and vehicle characteristics and/or load information of the vehicle (1). The processing circuitry (1202) is further configured to, based on the predicted first vehicle motion and the first value, determine a stability risk of the vehicle (1).

## Description

### TECHNICAL FIELD

The disclosure relates generally to handling a stability risk of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Stability related hazards in vehicles can cause accidents and may incur damages to vehicles, passengers, drivers, and surroundings. Complex vehicle dynamics, environmental conditions, e.g. road conditions, wind gusts etc. and human driver errors are typically the main reasons of stability related hazards.

Stability related hazards include many different aspects of instability such as vehicle rollover, jackknifing, and trailer swing out.

Rollover is when a vehicle rolls around its side.

Jackknifing refers to a loss of directional stability in a towing vehicle unit, such as a truck or tractor, resulting in an excessive articulation angle with a trailer. This occurs when the towing unit loses its lateral tire grip and starts sliding sideways.

Trailer swing refers to a loss of directional stability in a trailing unit, which happens when the trailer loses lateral tire grip and starts sliding.

A Rearward Amplification (RA, RWA) is usually defined as the ratio of the maximum value of the motion variable of interest, e.g. yaw rate or lateral acceleration of a last unit, e.g., a trailer, to that of a towing vehicle unit, e.g., a tractor, during a steering maneuver such as a lane change maneuver at high speeds.

Rollover mitigation is included in most electronic stability control systems for heavy goods vehicles. The roll over mitigation strategy used in these systems measures a driver's current steering wheel angle and steering wheel angle rate, as well as the vehicle's current longitudinal velocity, which are used to calculate a steady state lateral acceleration that will be achieved by the vehicle in the next few seconds, assuming driver inputs, i.e., steering wheel inputs and pedal inputs, are kept constant. If the predicted lateral acceleration value is greater than a rollover threshold, then the vehicle is automatically braked to reduce speed. This strategy is relatively simple and includes large assumptions when it comes to the driver input. It also does not specifically consider the type of trailers being towed and their potential for additional rearward amplification of lateral acceleration under certain dynamic steering situations.

For jackknifing, yaw stability control is included in most electronic stability control systems for heavy goods vehicles. When an oversteer event is detected for a truck which can lead to jackknifing, individual wheel braking is typically used on the truck to provide a counter yaw moment, and at the same time the trailer is automatically braked to stretch the vehicle combination. This system relies on detecting oversteering of the truck by comparing a measured truck yaw rate to what is expected for a given steering wheel angle. Since jackknifing can occur very quickly, such a reactive approach will not always be able to intervene early enough to prevent the jackknifing event.

For trailer swing out, Antilock Braking Systems (ABS) is typically included in heavy goods vehicles today. By reducing the occurrence of wheel lock on the trailer, the likelihood of trailer swing out is reduced such as by conserving lateral force on the trailer wheels.

While some of these approaches help mitigate some stability hazards, stability problems still remain. Hence, there is a strive to improve handling of stability risks of vehicles.

### SUMMARY

According to a first aspect of the disclosure, a computer system comprising processing circuitry configured to handle a stability risk of a vehicle is provided.

The processing circuitry is configured to, for a future time period, predict a first vehicle motion of the vehicle and establish a first value indicative of an uncertainty of the predicted first vehicle motion. The first vehicle motion is predicted based on any one or more out of:
- a traffic situation of a road travelled by the vehicle,
- a driver model configured to predict one or more future inputs of a driver of the vehicle based on previous one or more inputs of the driver or based on sensor data indicative of a state of the driver,
- an estimation of a driving environment of the vehicle, and
- an estimation of vehicle characteristics and/or load information of the vehicle.

The processing circuitry is further configured to, based on the predicted first vehicle motion and the first value, determine a stability risk of the vehicle. The stability risk may indicate a risk for a stability hazard for the vehicle in the future time period such as rollover, jackknifing or trailer swing for the vehicle.

The first aspect of the disclosure may seek to handling of stability risks of the vehicle.

A technical benefit may include improved safety for handling stability of the vehicle. This is since the first vehicle motion is predicted for the future time period, the stability risk of the vehicle can be determined ahead of time, and hence, it is possible to handle a stability hazard earlier in time as compared to reacting on current stability hazards. This makes it possible to completely avoid stability hazards if the prediction is accurate. Furthermore, since the stability risk of the vehicle is further determined based on the first value, i.e., based on the uncertainty of the predicted first vehicle motion, safety can further be improved. This is since when the uncertainty of the first vehicle motion is high such as above a threshold, the risk of stability hazards may grow in a corresponding manner. Therefore when the stability risk is determined based on predicted first vehicle motion and its uncertainty, then for some scenarios it is possible to avoid any potential stability that otherwise would occur since the prediction of the first vehicle motion was inaccurate or partly missing.

Including uncertainty for determining the stability risk may further allow for avoiding false positives of stability hazards.

Furthermore, since the first vehicle motion can be predicted on one or more different aspects, i.e., any one or more out of the traffic situation, the driver model, the estimation of the driving environment, an estimation of vehicle characteristics and/or load information, then the first value may further be based on any one or more of these and their respective indicators for uncertainty.

In other words, if the predicted first vehicle motion may indicate a borderline stability risk but with high uncertainty, no action may be needed until more information is gathered or an alert can be triggered. However is the same severity stability risk is predicted with low uncertainty an intervention can be made to counter any predicted stability hazard, and in these situations, intervention can be made earlier than current reactive systems.

Optionally in some examples, including in at least one preferred example, the processing circuitry is further configured to, in response to the stability risk of the vehicle being within a first predefined interval such as above a first threshold, trigger an alert.

A technical benefit may include improved safety for handling stability of the vehicle. This is since the alert can be triggered based on the stability risk concluded from the predicted first vehicle motion and its uncertainty. In other words, when the first vehicle motion indicates a stability risk, or if the predicted first vehicle motion and its uncertainty indicates that there may be a chance of a future risk due to the uncertainty, the alert can be triggered to warn of the potential stability hazard.

Optionally in some examples, including in at least one preferred example, the alert is exterior to the vehicle for alerting external road users, and/or the alert is interior to the vehicle for alerting a driver and/or a passenger of the vehicle.

A technical benefit may include improved safety for handling stability of the vehicle. This is since the alert can warn both inside and outside the vehicle, e.g., to drivers, passengers, or to other road users.

Optionally in some examples, including in at least one preferred example, the processing circuitry is further configured to, in response to the stability risk of the vehicle being within a second predefined interval such as above a second threshold, trigger a preventive action to be performed by the vehicle.

A technical benefit may include improved safety for handling stability of the vehicle. This is since the preventive action can be triggered based on the stability risk concluded from the predicted first vehicle motion and its uncertainty. In other words, when the first vehicle motion indicates a stability risk, or if the predicted first vehicle motion and its uncertainty indicates that there may be a significant probability of a future risk due to the uncertainty, the preventive action can be triggered to avoid any stability hazard before they can occur.

Optionally in some examples, including in at least one preferred example, the processing circuitry is further configured to determine the preventive action based on the predicted first vehicle motion and/or the first value.

A technical benefit may include improved safety for handling stability of the vehicle. This is since the preventive action can target to counter a stability hazard of the predicted first vehicle motion if the first value does not indicate too high uncertainty, e.g., below a threshold or within a predefined risk-free domain. If the first value indicates a high uncertainty of the predicted first vehicle motion, e.g., above a threshold or within a predefined risk domain, then a default preventive action may take place, such as a controlled stop, torque reduction of wheels of the vehicle, or any other suitable default preventive action that works well independently of stability hazard.

Optionally in some examples, including in at least one preferred example, the preventive action is to trigger a stability control functionality of the vehicle.

A technical benefit may include improved safety for handling stability of the vehicle. This is since the vehicle can mitigate or avoid a stability hazard by improving the traction of the vehicle using the triggered stability control functionality of the vehicle.

Optionally in some examples, including in at least one preferred example, the processing circuitry is configured to obtain during a first time period, first sensor data indicative of a state of the driver, and/or previous one or more first inputs of the driver.

In these examples, the processing circuitry is configured to, using the driver model and based on the first sensor data and/or the previous one or more first inputs, predict one or more second driver inputs for the future time period, and establish a second value indicative of an uncertainty of the predicted one or more second driver inputs.

In these examples, the processing circuitry is configured to, predict the first vehicle motion and/or to establish the first value based on the predicted one or more second driver inputs and/or the second value.

A technical benefit may include more accurate prediction of the first vehicle motion and/or more accurate indication of the uncertainty of the predicted first vehicle motion. A consequence is improved safety for handling stability of the vehicle. This is since the stability risk can more accurately be determined and it follows that any stability hazard can be efficiently handled before a potential stability hazard occurs.

In other words, the driver model, e.g., a predefined model, may be used with the first sensor data and/or the previous one or more first inputs, to predict how a driver will input the one or more second driver inputs in the future time period. Said one or more second driver inputs may be used to predict the first vehicle motion, i.e., as it will directly control the vehicle. If the uncertainty is high for predicting the one or more second driver inputs, i.e., the second value, then the uncertainty may be correspondingly high for predicting the first vehicle motion, i.e., the first value.

Optionally in some examples, including in at least one preferred example, the processing circuitry is further configured to, obtain second sensor data and/or map information indicative of the traffic situation.

In these examples, the processing circuitry is configured to, predict one or more third driver inputs based on the traffic situation for the future time period, and establish a third value indicative of the uncertainty of the predicted one or more third driver inputs.

In these examples, the processing circuitry is configured to, predict the one or more second driver inputs and/or to establish the second value based on the predicted one or more third driver inputs and/or the third value.

A technical benefit may include a more accurate prediction of the one or more second driver inputs and/or more accurate established second value. This is since the one or more second driver inputs can be based on the predicted one or more third driver inputs and its associated uncertainty, i.e., the third value. This means that the traffic situation used to predict the third or more driver inputs may further at least partly predict the second one or more inputs such as to predict if the driver will turn, stop, accelerate, etc. As the one or more second driver inputs may be predicted based on the one or more third driver inputs, it follows that the uncertainty according to the second value may be based on the uncertainty according to the third value.

Optionally in some examples, including in at least one preferred example, the first sensor data comprises images and/or video of the driver. In these examples, the processing circuitry is further configured to classify a state of the driver based on the first sensor data. In these examples the state of the driver is indicative of a probability of one or more driver inputs to be made by the driver in the future time period.

In these examples, the processing circuitry is further configured to predict the one or more second driver inputs and/or establish the second value based on the classified state of the driver.

A technical benefit may include a more accurate prediction of the one or more second driver inputs and/or more accurate established second value. Classifying the state of the driver using images and/or video may be used to at least partly predict the driver's next actions. This means that the classified state of the driver may further at least partly predict the one or more second inputs. I.e., will the driver reliably perform actions, will the driver drive in a jerky manner, will the driver drive aggressively, and so on. These are all driver states that may affect the one or more second driver inputs and/or the second value, and finally the prediction of the first vehicle motion.

Optionally in some examples, including in at least one preferred example, the processing circuitry is further configured to, estimate environment data of an expected future driving environment of the vehicle for the future time period, and establish a fourth value indicative of the uncertainty of the estimated environment data. In these examples, the environment data may for example comprise any one or more out of:
- one or more banks and associated angles of the road travelled by the vehicle,
- one or more slopes and associated angles of the road travelled by the vehicle,
- a curvature of the road travelled by the vehicle,
- a friction coefficient of the road travelled by the vehicle,
- weather condition of the road travelled by the vehicle.

In these examples, the estimation may for example be based on any one or more out of:
- sensor data obtained from set of sensors of the vehicle,
- map information of the road travelled by the vehicle,
- sensor data and/or environment data communicated from at least one second road user and/or infrastructure of the road travelled by the vehicle.

In these examples, the processing circuitry is further configured to predict the first vehicle motion and/or to establish the first value based on the estimated environment data and/or the fourth value.

A technical benefit may include a more accurate prediction of the first vehicle motion and more accurate establishment of the first value, on the basis on the estimation of the environment data and its corresponding uncertainty, i.e., the fourth value. The uncertainty of the predicted first vehicle motion, i.e., the first value may at least partly be based on the uncertainty of the estimated environment data, i.e., the fourth value. The environment data may for example provide information of a friction of a surface to be travelled by the vehicle which may be used to, e.g., together with other estimations or predictions herein, to predict the first vehicle motion.

Optionally in some examples, including in at least one preferred example, the processing circuitry is further configured to estimate vehicle characteristics and/or load information of the vehicle for the future time period, and to establish a fifth value indicative of the uncertainty of the estimated vehicle characteristics and/or load information.

In these examples, the vehicle characteristics and/or load information may comprise any one or more out of:
- load distribution of the vehicle,
- load per vehicle unit, axle, and/or wheel of the vehicle,
- an effective wheel radius of the vehicle, and
- Center of Gravity (CoG) of the vehicle.

In these examples, the estimation may be based on any one or more out of:
- one or more previous driver inputs,
- a motion of the vehicle,
- one or more measurement from stationary infrastructure units such as part of a terminal, or police/customs stop,
- a detected maneuver by the vehicle, and
- previous vehicle characteristics and/or load information.

In these examples, the processing circuitry is further configured to predict the first vehicle motion and/or to establish the first value based on the estimated vehicle characteristics and/or load information of the vehicle and/or the fifth value.

A technical benefit may include a more accurate prediction of the first vehicle motion and more accurate establishment of the first value, on the basis on the estimation of the vehicle characteristics and/or load information of the vehicle and its corresponding uncertainty, i.e., the fifth value. The uncertainty of the predicted first vehicle motion, i.e., the first value may at least partly be based on the uncertainty of the estimated vehicle characteristics and/or load information of the vehicle, i.e., the fifth value. The estimated vehicle characteristics and/or load information of the vehicle may for example provide information of the CoG and/or load of the vehicle which may be used to, e.g., together with other estimations or predictions herein, to predict the first vehicle motion.

Optionally in some examples, including in at least one preferred example, the first value indicates a probability of that a future motion of the vehicle aligns with the predicted first vehicle motion.

A technical benefit may include improved safety for handling stability of the vehicle. This is since the uncertainty, i.e., the first value, can accurately indicate how likely it is that the predicted first vehicle motion will occur. If the probability is high and a stability hazard can be determined, then it follows that the stability risk is high and can then be mitigated or avoided before such motion occurs.

Optionally in some examples, including in at least one preferred example, the processing circuitry is further configured to predict at least two vehicle motions of the vehicle for the future time period.

In these examples, the processing circuitry is further configured to, for each vehicle motion out of the at least two vehicle motions, estimate a respective probability of that the respective vehicle motion aligns with a future vehicle motion of the vehicle.

In these examples, the processing circuitry is further configured to, predict the first vehicle motion of the vehicle and/or to establish the first value based on the predicted at least two vehicle motions and/or the probabilities of the at least two vehicle motions.

A technical benefit may include improved safety for handling stability of the vehicle. This is since the at least two vehicle motions can be used in any suitable manner to more accurately predict the first vehicle motion and to establish the first value. For example, the vehicle motion with a most probable trajectory of the at least two vehicle motions may be selected to be the predicted first vehicle motion, or the at least two vehicle motions may be aggregated such as to predict the first vehicle motion and to establish the first value with vehicle motion prediction and uncertainty as a compound of different vehicle motion predictions. In this way, stability hazards can be detected even when it is highly uncertain where the vehicle will travel. This is since determining the stability risk may then effectively be based on whether a stability hazard can happen for any of the at least two vehicle motions.

According to a second aspect of the disclosure, a vehicle is provided. The vehicle comprises the computer system according to the first aspect.

Technical benefits of the second aspect correspond to technical benefits of the first aspect, and vice versa.

According to a third aspect of the disclosure, a computer-implemented method for handling a stability risk of a vehicle is provided.

The method comprises, by processing circuitry of a computer system, for a future time period, predicting a first vehicle motion of the vehicle and establishing a first value indicative of an uncertainty of the predicted first vehicle motion. The first vehicle motion is predicted based on any one or more out of: a traffic situation of a road travelled by the vehicle, a driver model configured to predict one or more future inputs of a driver of the vehicle, based on previous one or more inputs of the driver and/or based on sensor data indicative of a state of the driver, an estimation of a driving environment of the vehicle, and an estimation of vehicle characteristics and/or load information of the vehicle. The method comprises, by the processing circuitry, based on the predicted first vehicle motion and the first value, determining a stability risk of the vehicle.

Optionally in some examples, including in at least one preferred example, the method comprises, by the processing circuitry, in response to the stability risk of the vehicle being within a first predefined interval such as above a first threshold, triggering an alert.

Optionally in some examples, including in at least one preferred example, the method comprises, by the processing circuitry, in response to the stability risk of the vehicle being within a second predefined interval such as above a second threshold, triggering a preventive action to be performed by the vehicle.

Optionally in some examples, including in at least one preferred example, predicting the first vehicle motion of the vehicle and/or establishing the first value further comprises:
- by the processing circuitry, predicting at least two vehicle motions of the vehicle for the future time period,
- by the processing circuitry, for each vehicle motion out of the at least two vehicle motions, estimating a respective probability of that the respective vehicle motion aligns with a future vehicle motion of the vehicle, and
- predicting the first vehicle motion of the vehicle and/or establishing the first value based on the predicted at least two vehicle motions and/or the probabilities of the at least two vehicle motions.

Technical benefits of the third aspect correspond to technical benefits of the first aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a flow chart of a method according to an example.
**FIG. 3** is a schematic block diagram according to an example.
**FIG. 4** illustrates an example scenario.
**FIG. 5** illustrates an example scenario.
**FIG. 6** illustrates an example scenario.
**FIG. 7** illustrates an example scenario.
**FIG. 8** illustrates an example scenario.
**FIG. 9** illustrates an example scenario.
**FIG. 10** is a flow chart of a method according to an example.
**FIG. 11** is another view of **FIG. 1****,** according to an example.
**FIG. 12** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may typically relate to handling stability of a vehicle. In particular, a stability risk is determined for a predicted first vehicle motion for a future time period. The future time period may for example be 1-3 second from a current time, or estimated 1-3 seconds from a specific location in the future.

A stability risk as used herein may mean a quantified risk for the vehicle to be in an unstable state. The risk may be determined by comparing the predicted first vehicle motion and its uncertainty using predefined heuristics and/or based on statistical models. For example, the stability risk may indicate how likely it is that the vehicle may experience a stability hazard such as trailer swing, jackknifing or rollover, in the future time period.

Since the stability risk is determined for the predicted first vehicle motion potential stability hazards can be prevented or mitigated before they even have chance to occur.

Taking into account the predicted

To improve accuracy of the predicted first vehicle motion, the prediction may rely on multiple aspects of estimations and/or predictions which may affect the first vehicle motion, e.g., driver input, driver state, environment estimations, vehicle characteristics and load distribution, just to name a few non-limiting factors.

Examples herein further take into account uncertainty of the predicted first vehicle motion when assessing the stability risk of the predicted first vehicle motion. In particular, uncertainty of the above-mentioned factors on which the predicted first vehicle motion is based, may be accounted for when predicting the first vehicle motion and its associated uncertainty.

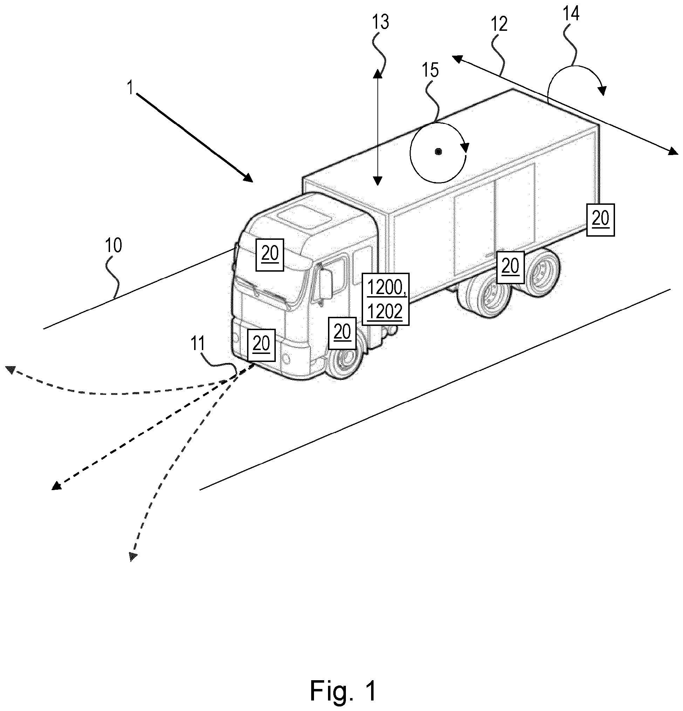

**FIG. 1** is an exemplary **vehicle 1** according to an example. The vehicle 1 may be any suitable vehicle, e.g., a combination vehicle with a trailer, a truck, a bus, a car, or any heavy duty vehicle. The vehicle 1 is arranged to travel a **road 10.**

The vehicle 1 may comprise a **set of sensors 20.** The set of sensors 20 may comprise any number of suitable sensors. Sensor data obtained in examples herein may be obtained by the set of sensors 20.

The set of sensors 20 may comprise a camera in the vehicle 1, e.g., directed towards a driver of the vehicle.

The set of sensors 20 may comprise any one or more out of:
- a speedometer of the vehicle,
- one or more wheel speed sensors,
- one or more location sensors, e.g., using Global Positioning System (GPS) and/or a Global Navigation Satellite System (GNSS),
- one or more Light Detection and Ranging (Lidar) sensors,
- one or more cameras directed towards a road surface of the road 10,
- one or more cameras directed towards a traffic of the road 10,
- one or more cameras directed towards surroundings of the vehicle 1,
- one or more Radio Detection and Ranging (Radar) sensors, and
- an Inertial Measurement Unit (IMU).

Examples herein may predict a motion of the vehicle 1. FIG. 1 illustrated three candidate motions 11 where any one or more out of the candidate motions 11 may be a predicted first vehicle motion or may form part of a predicted first vehicle motion of examples herein.

Depending on the motion of the vehicle 11, i.e., which of the candidate motions 11 or combination of them will occur in the future, a stability of the vehicle 1 may be affected. In FIG. 1 this is illustrated by a **lateral motion 12,** a **vertical motion 13,** and a **roll motion 14,** and **yaw motion 15** i.e., which lateral motion 12, vertical motion 13, roll motion 14, yaw motion 15, or a combination thereof, may be dependent on which vehicle motion of the candidate motions 11 will occur, and may further be used to determine a stability risk of the vehicle 1. In other words, any predictions of vehicle motions of the vehicle 1 may further affect motion parameters which may imply a risk for a future stability hazard of the vehicle 1.

While the example in FIG. 1 illustrates a single unit truck examples herein further apply to articulated multi-unit heavy vehicles i.e. including trailers. In these examples, the relative motion between vehicle unit such as between tractor and trailer of the vehicle 1 may be needed to monitor and predict. In other words, the vehicle 1 may in some examples comprise a tractor and a trailer.

Examples herein may be performed by a **computer system 1200** and/or a **processing circuitry 1202** therein.

The computer system 1200 and/or the processing circuitry 1202 may be comprised in the vehicle 1 or may be remote to the vehicle 1, e.g., in a server or part of a cloud service.

In some examples, the computer system 1200 and/or the processing circuitry 1202 may be an Electronic Control Unit (ECU) of the vehicle 1.

The computer system 1200 and/or the processing circuitry 1202 may be communicatively coupled, e.g., wired or wirelessly, to any of the entities of the vehicle 1, e.g., the set of sensors 20. The computer system 1200 and/or the processing circuitry 1202 may be able to control the set of sensors 20.

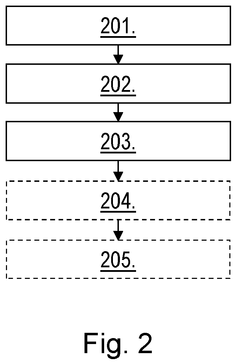

**FIG. 2** is a flow chart of a computer-implemented method for handling a stability risk of the vehicle 1 according to an example. The method may be performed by the computer system 1200 and/or the processing circuitry 1202. The method comprises at least one of the following actions. Optional actions may be indicated by dashed boxes in FIG. 2.

### Action 201

The method comprises, for a future time period, predicting a first vehicle motion of the vehicle 1.

The first vehicle motion is predicted based on any one or more out of:
- a traffic situation of a road 10 travelled by the vehicle 1,
- a driver model configured to predict one or more future inputs of a driver of the vehicle 1, based on previous one or more inputs of the driver and/or based on sensor data indicative of a state of the driver,
- an estimation of a driving environment of the vehicle 1, and
- an estimation of vehicle characteristics and/or load information of the vehicle 1.

The above-mentions list of options may be a list of factors for which the prediction of the first vehicle motion is based upon. In examples herein, the predicted first vehicle motion for the future time period may be based on one or multiple factors, potentially including one or more factors not listed above.

An accuracy or uncertainty of the predicted first vehicle motion may increase as more factors are included to predict the first vehicle motion for the future time period. For example, if the first vehicle motion is predicted based on the traffic situation of the road 10 and using the driver model to predict one or more future inputs of the driver, may lead to a higher accuracy and lower uncertainty vehicle motion prediction than just using the estimation of the driving environment of the vehicle 1.

In typical situations, all of the factors are used to predict the first vehicle motion for the future time period. In other words the first vehicle motion may be predicted based on all of:
- the traffic situation of the road 10 travelled by the vehicle 1, or a prediction thereof and/or its associated uncertainty,
- one or more future inputs of the driver of the vehicle 1 predicted using the driver model, and/or its associated uncertainty,
- the estimation of the driving environment of the vehicle 1, and/or its associated uncertainty, and
- estimation of vehicle characteristics and/or load information of the vehicle 1, and/or its associated uncertainty.

The prediction of the first vehicle motion may be based on uncertainties of the respective factors, e.g., weighted, such as estimated variances, confidence intervals, or probabilities of that the respective factors are correctly predicted or estimated. I.e., the factors indicated to be least uncertain may have more impact on the prediction.

Predicting the first vehicle motion of the vehicle 1 may use any suitable prediction model, e.g., based on heuristics or based on a first machine learning model. The first machine learning model may be trained on the above-mentioned factors and a measured vehicle motion in the future time period. The first machine learning model may be trained while using the vehicle 1 or may be trained using one or more training vehicles.

In some examples, predicting the first vehicle motion may comprise predicting a trajectory and/or any other suitable vehicle motion information of the first vehicle motion, e.g., suitable for determining a stability or stability risk of the vehicle 1.

In some examples, predicting the first vehicle motion may comprise predicting a vehicle motion with a variance, e.g., on a prediction certainty or based on predicting a number of vehicle motions within a same range of motion. In some examples, predicting the vehicle motion may comprises predicting a vehicle motion where one or more parameters, e.g., speed, yaw motion, steering wheel angle, etc. of the vehicle motion is set to vary within an interval.

In some examples, predicting the first vehicle motion of the vehicle 1 further comprises:
- predicting at least two vehicle motions of the vehicle 1 for the future time period, and
- for each vehicle motion out of the at least two vehicle motions, estimating a respective probability of that the respective vehicle motion aligns with a future vehicle motion of the vehicle 1.

Predicting the at least two vehicle motions may be performed based on the above-mentioned factors, or in any suitable manner as described herein for predicting the first vehicle motion except that the vehicle motions of the at least two vehicle motions may be alternative vehicle motions, e.g., wherein the different vehicle motion indicates that the vehicle 1 turns in different directions. Alternatively, the at least two vehicle motions may be predicted based on varying any suitable vehicle motion parameter of the different vehicle motions, or based partly on a pseudo-random function when determining different trajectories of the vehicle 1 for the at least two vehicle motions.

In some examples, a possible trajectory to consider for the at least two vehicle motions may represent a case where no steering input is made to the vehicle 1.

In addition to a time series of different steering angles, the input such as accelerations and braking requests may also be considered for the at least two vehicle motions.

In other words, the different trajectories of the at least two vehicle motions may also represent the possibility e.g. the driver does or does not brake appropriately.

In these examples, predicting the first vehicle motion of the vehicle 1 may be based on the predicted at least two vehicle motions and/or the probabilities of the at least two vehicle motions. For example the prediction of the first vehicle motion may be the vehicle motion of the at least two vehicle motions with the highest probability. Alternatively, a compounded or aggregated vehicle motion may be selected, i.e., if several vehicle motions have similar probabilities, then the predicted first vehicle motion may be a vehicle motion with a variance corresponding to the corresponding vehicle motions of the at least two vehicle motions.

### Prediction using the driver model and/or based on traffic situation

In some examples, the drivel model is used to predict future driver inputs used as a basis for predicting the first vehicle motion. Some of these examples are discussed below. The driver model may comprise heuristics mapping driver inputs to future driver inputs, e.g., together with other inputs such as any one or more out of:
- a steering wheel input and/or pedal inputs of the vehicle 1,
- input to indicator lights, e.g., for turning,
- sensor data of the vehicle 1, e.g., speed or acceleration,
- traffic information,
- sensor data of the driver and/or a classified state of the driver,
to output future driver inputs that is likely to be made by the driver of the vehicle 1.

Alternatively, the driver model may be a second machine learning model which is trained on driver inputs, such as any one or more out of:
- a steering wheel input and/or pedal inputs of the vehicle 1,
- sensor data of the vehicle 1, e.g., speed or acceleration,
- sensor data of the driver and/or the classified state of the driver
to output future driver inputs that are likely to be made by the driver of the vehicle 1.

The driver model may be established, e.g., trained, based on solely a specific driver, i.e., the driver of the vehicle 1, or may be established, e.g., trained, based on any number of drivers.

In some examples, predicting the first vehicle motion, e.g., using the driver model, comprises obtaining during a first time period, e.g., immediately prior to the future time period such as 0.5-3 seconds prior to the future time period, first sensor data indicative of a state of the driver, and/or previous one or more first inputs of the driver. The one or more first inputs of the driver may comprise steering wheel angle and/or pedal inputs of the driver. The first inputs of the driver may comprise turning indicator information, e.g., if the driver has indicated to turn left or right.

In some of these examples, predicting the first vehicle motion comprises using the driver model and based on the first sensor data and/or the previous one or more first inputs, predict one or more second driver inputs for the future time period, and establish a second value indicative of an uncertainty of the predicted one or more second driver inputs. The one or more second driver inputs may indicate steering wheel angle and/or pedal inputs likely to be made by the driver in the future time period.

The second value may be established by estimating a variance or a confidence interval of the one or more second driver inputs, e.g., based on a predefined statistical model.

Predicting the first vehicle motion may further be based on the predicted one or more second driver inputs and/or the second value. For example, the one or more second driver inputs may indicate a jerky and unstable vehicle motion, e.g., at least in combination with other vehicle motion factors predicted or estimated in examples herein. If the second value indicates a high uncertainty, it may either be difficult to use the one or more second driver inputs for predicting the first vehicle motion, alternatively, the first vehicle motion may be predicted to have a high variance its trajectory.

In some of these examples, the first sensor data comprises images and/or video of the driver. In some of examples, predicting the one or more second driver inputs and/or to establishing the second value, comprises classifying a state of the driver based on the first sensor data. The state of the driver is in these examples indicative of a probability of one or more driver inputs to be made by the driver in the future time period. The state of the driver may further indicate a reliability of the driver, e.g., how likely the driver is to perform unexpected driver inputs e.g., as a result of the driver being tired, angry, or emotional.

In some examples, classifying a state of the driver comprises obtaining sensor data indicative of a sway of the vehicle 1, e.g., how it crosses lines in the road 10, and may accordingly classify the driver as tired.

In some examples, predicting the one or more second driver inputs and/or to establishing the second value comprises predicting the one or more second driver inputs and/or establishing the second value based on the classified state of the driver. In other words, the one or more second driver inputs or its uncertainty i.e., the second value, may at least partly be predicted based on how the face of the driver and/or driver movement indicates the state of the driver. For example, if the driver is looking away from the road or if the driver is in a heated argument with a passenger, then the driver input may not necessarily correspond to how a driver normally would react to e.g., the estimated traffic situation.

In some of these examples, predicting the one or more second driver inputs and/or to establishing the second value, comprises obtaining second sensor data such as video or images, e.g., from the set of sensors 20, and/or map information indicative of the traffic situation. The map information may be predefined and/or received as requested from a remote server. The second sensor data and/or the map information may be indicative of the road 10 in a current driving direction of the vehicle 1 indicative of the traffic situation by being any one or more out of:
- if the road 10 is turning, e.g., and its curvature,
- if the road 10 has a crossing or a roundabout,
- if the road 10 is a highway,
- if the road 10 is congested,
- if the road 10 comprises other road users, and
- if the road 10 have any occurring accidents.

In some of these examples, predicting the one or more second driver inputs and/or to establishing the second value, comprises predicting one or more third driver inputs, e.g., by using the driver model, and establish a third value indicative of the uncertainty of the predicted one or more third driver inputs, based on the traffic situation for the future time period. In other words, with respect to the traffic situation as indicated by the map information or second sensor data, the one or more third driver inputs can be predicted, e.g., indicative of pedal positions and/or steering wheel angle to be inputted by the driver for the future time period and its associated uncertainty may be predicted.

The third value may be established by estimating a variance or a confidence interval of the predicted one or more third driver inputs, e.g., based on a predefined statistical model.

In some of these examples, predicting the one or more second driver inputs and/or to establishing the second value is based on the predicted one or more third driver inputs and/or the third value. In other words, the traffic situation and how the driver is likely to handle said traffic situation may affect the prediction of the one or more second driver inputs. Likewise, the third value may affect how much the one or more third driver inputs is to affect the prediction of the one or more second driver inputs and/or the establishment of the second value.

### Environment data estimation

In some examples, an estimation of the driving environment of the vehicle 1 is used to predict the first vehicle motion for the future time period, e.g., combinable with the predictions above for the driver model and/or the traffic situation.

Predicting the first vehicle motion may comprise estimating environment data of an expected future driving environment of the vehicle 1 for the future time period, i.e., the estimation of the driving environment, and establishing a fourth value indicative of the uncertainty of the estimated environment data.

The fourth value may be established by estimating a variance or a confidence interval of the estimated driving environment or environment data, e.g., based on a predefined statistical model.

Esitmating the environment data may comprise using any suitable heuristic model or may use a machine learning model, e.g., trained based on one or more training vehicles driving over different surfaces, e.g., in the road 10 and/or on other roads, where the environment data may be accurately set by a user or may be predefined to use for training.

In these examples, the environment data, e.g., as estimated as part of the environment data of the expected future driving environment of the vehicle 1 for the future time period, may comprise any one or more out of:
- one or more banks and associated angles of the road 10 travelled by the vehicle 1, e.g., which may be used at least partly to predict a roll angle of the vehicle 1,
- one or more slopes and associated angles of the road 10 travelled by the vehicle 1,
- a curvature of the road 10 travelled by the vehicle 1, e.g., indicating how the vehicle 1 may turn, and
- a friction coefficient of the road 10 travelled by the vehicle 1, and
- weather condition of the road 10 travelled by the vehicle 1, e.g., snowing or raining or dry.

All of the above options of environment data may cause different vehicle motions of the vehicle 1 and may therefore affect the predicted first vehicle motion.

In some of these examples, the estimation of the environment data is based on any one or more out of:
- sensor data obtained from the set of sensors 20 of the vehicle 1, e.g., video or image data from cameras of the vehicle 1,
- map information of the road 10 travelled by the vehicle 1, e.g., predefined map information, and
- sensor data and/or environment data communicated from at least one second road user and/or infrastructure of the road 10 travelled by the vehicle 1, e.g., indicative of any of the above environment data.

In some of these examples, predicting the first vehicle motion is based on the estimated environment data and/or the fourth value. In other words, the first vehicle motion may be predicted based on environment data, and/or based on the uncertainty of the environment data.

### Vehicle characteristics and/or load information estimation

In some examples, an estimation of the vehicle characteristics and/or load information estimation of the vehicle 1 is used as a basis to predict the first vehicle motion for the future time period, e.g., combinable with the predictions above for the driver model and/or the traffic situation and/or the estimation of the environment data.

Predicting the first vehicle motion may comprise estimating vehicle characteristics and/or future load information of the vehicle 1 for the future time period, and to establish a fifth value indicative of the uncertainty of the estimated vehicle characteristics and/or load information.

The estimated vehicle characteristics and/or load information may comprise any one or more out of:
- load distribution of the vehicle 1,
- load per vehicle unit, e.g., tractor or trailer if the vehicle 1 is a combination vehicle,
- load per axle of the vehicle 1,
- load per wheel of the vehicle 1,
- axle spacing / wheel base of the different vehicle units if the vehicle 1 is a combination vehicle,
- wheel radius of wheels of the vehicle 1,
- lateral cornering stiffnesses of the different tires / tire groups,
- effective wheel radius of the vehicle 1, and
- CoG of the vehicle 1, or CoG of tractor and CoG of trailer if the vehicle 1 is a combination vehicle.

A combination vehicle as user herein may be a vehicle which comprises multiple vehicle units, such as a truck and a trailer.

In these examples, the estimation of the vehicle characteristics and/or load information is based on any one or more out of:
- one or more previous driver inputs, e.g., previous pedal positions and/or steering wheel angles of the vehicle 1 and/or turning indications, as input by a driver of the vehicle 1,
- a motion of the vehicle 1, e.g., to compare with the one or more previous driver inputs to perform the estimation(s) of the vehicle characteristics and/or load information,
- a detected maneuver by the vehicle 1, e.g., to compare with the one or more previous driver inputs to perform the estimation(s) of the vehicle characteristics and/or load information,
- previous vehicle characteristics and/or load information, e.g., to detect if and/or how it/they may have changed.

In some of these examples, predicting the first vehicle motion is based on the estimation of the vehicle characteristics and/or load information and/or the fifth value. In other words, the first vehicle motion may be predicted based on the vehicle characteristics and/or load information and/or based on the uncertainty of the vehicle characteristics and/or load information.

The fifth value may be established by estimating a variance or a confidence interval of the estimated vehicle characteristics and/or load information, e.g., based on a predefined statistical model.

Predicting the first vehicle motion may comprise predicting one or more vehicle motion parameters. These vehicle motion parameters may for example comprise any one or more out of:
- A longitudinal speed or acceleration of the vehicle 1,
- A lateral speed or acceleration of the vehicle 1,
- When the vehicle 1 is a combination vehicle, a longitudinal speed or acceleration of different vehicle units of the vehicle 1, e.g., tractor and trailer,
- When the vehicle 1 is a combination vehicle, a lateral speed or acceleration of different vehicle units of the vehicle 1, e.g., tractor and trailer, and
- When the vehicle 1 is a combination vehicle, relative position of different vehicle units, and/or articulation angle between the different vehicle units.

### Action 202

The method comprises, establishing a first value indicative of an uncertainty of the predicted first vehicle motion, as predicted in action 201. In some examples, the first value corresponds to a variance of the predicted first vehicle motion.

The first value may indicate how likely it is that the predicted first vehicle motion is to occur during the future time period. In other words, the first value may be a confidence of the prediction of action 201. In some examples, the first value indicates a probability of that a future motion of the vehicle 1 aligns with the predicted first vehicle motion.

Predicting a value indicative of an uncertainty of an estimation or prediction is common for any prediction or estimation, and can be performed in any suitable manner for the first value, or for any of the other values established to indicate uncertainties of examples herein. In particular, the uncertainty of the predicted first vehicle motion, i.e., the first value, may be established by considering the uncertainties and/or probability distributions of all inputs to a prediction model, as well as the uncertainties in the prediction model's parameters. In other words, the first value may be established by estimating a variance, confidence interval or probability of the predicted first vehicle motion, e.g., based on a predefined statistical model.

Since the uncertainty is based on the prediction as in action 201, the uncertainty may further be based on predictions and/or estimations of which the first vehicle motion is predicted based on. In other words, the first value may be established based on any one or more out of:
- one or more predictions made using the driver model and/or its associated uncertainty, e.g., the one or more second driver inputs and/or the second value,
- the traffic situation of a road 10 travelled by the vehicle 1 and/or its associated uncertainty, e.g., the one or more third driver inputs based and/or the third value indicative of the uncertainty of the predicted one or more third driver inputs,
- the classified state of the driver of the vehicle 1 and/or its indication of the probability of the one or more driver inputs to be made by the driver in the future time period,
- the estimation of a driving environment of the vehicle 1, and/or its associated uncertainty, e.g., the environment data of an expected future driving environment of the vehicle 1 for the future time period and/or the fourth value, and
- the estimated vehicle characteristics, load information of the vehicle 1 and/or its associated uncertainty, e.g., the estimated vehicle characteristics, the estimated future load information and/or the fifth value.

When the first vehicle motion is predicted as in action 201 is based on multiple factors, the uncertainty indicated by the first value may be established based on the uncertainty of the different multiple factors, i.e., as listed above. In other words, the first value may be a function of any one or more out of: the second value, third value, fourth value, and fifth value. The function may be an average, or may be the lowest or highest, and/or may be weighted against a prioritized value or a value of a corresponding estimation or prediction which may indicate a stability risk for the vehicle 1.

In some examples, establishing the first value may be based on the predicted at least two vehicle motions and/or the probabilities of the at least two vehicle motions, e.g., as predicted in action 201. In this way, it is possible to find the certainty about the predicted first vehicle motion by predicting multiple vehicle motions, e.g., as part of the at least two vehicle motions, to find how certain the predicted first vehicle motion is when considering many or all alternative vehicle motions. In some examples, the first value corresponds to the probability of the respective vehicle motion out of the at least two vehicle motions.

In some examples, the first value indicate a variance in the one or more vehicle motion parameters of the predicted first vehicle motion, e.g., determined over time and/or based on a predefined statistical model.

### Action 203

The method comprises, determining a stability risk of the vehicle 1 based on the predicted first vehicle motion and the first value.

The stability risk may indicate a risk for a stability hazard in the future time period such as rollover, jackknifing or trailer swing for the vehicle 1. The stability risk may be a quantified value, e.g., between 0 and 1 wherein 1 indicates a high chance of a stability hazard such as jackknifing, rollover or trailer swing, and 0 indicate no or a low chance of a stability hazard.

In other words, the stability risk may be a quantified value indicating how likely it is that the vehicle 1 will be unstable in the future time period considering the predicted first vehicle motion.

The stability risk may be determined based on that the predicted first vehicle motion indicates that a stability hazard is likely to occur, and considering the uncertainty of the predicted first vehicle motion, i.e., the first value.

As an example, the stability risk may be determined with respect to the one or more vehicle motion parameters, e.g., predicted as part of predicting the first vehicle motion as in action 201, and potentially a variance as indicated by the first value. Each of the one or more vehicle motion parameters may be compared to one or more predefined safe state parameters, and based on a predefined evaluation model, the stability risk may be determined.

In other words the stability risk may be determined based on any suitable predefined rules or heuristics or models for calculating the stability risk with respect to the one or more vehicle motion parameters and based on predefined safe combinations of vehicle motion parameters.

The stability risk may further be determined based on the first value, i.e., based on the uncertainty of the predicted first vehicle motion. If the uncertainty is high, e.g., above a threshold, then the stability risk may increase in a corresponding manner, e.g., by a predefined function. The stability risk may further be determined to be low if the first value indicates a false positive.

Since the stability risk can be determined for the predicted first vehicle motion and the first value, i.e., for a potential future time period, it is possible to avoid a stability hazard completely, or to start mitigating the stability hazard before it even occurs.

In some examples, determining the stability risk may as an alternative comprise determining whether or not the vehicle 1 will be unstable in the future time period considering the predicted first vehicle motion.

In other words, the stability risk may be a binary value, and the stability risk may be determined such that a stability hazard is likely to happen or not likely to happen in the future time period.

### Action 204

The method may further comprise, triggering an alert. The alert may be triggered in response to the stability risk of the vehicle 1 being within a first predefined interval such as above a first threshold.

In other words, the alert may be triggered when the stability risk indicates that there may be a stability hazard, e.g., due to the predicted first vehicle motion and/or due to a high uncertainty of the predicted first vehicle motion.

In some examples, the alert is exterior to the vehicle 1 for alerting external road users, e.g., such as by emitting lights and/or sounds such as by using a speaker or lights of the vehicle 1.

In some examples, the alert is interior to the vehicle 1 for alerting a driver and/or a passenger of the vehicle 1, e.g., such as by emitting lights and/or sounds inside the vehicle 1, such as by blinking a warning light on a dashboard of the vehicle 1.

### Action 205

The method may further comprise, triggering a preventive action. The preventive action may be triggered in response to the stability risk of the vehicle 1 being within a second predefined interval such as above a second threshold.

The preventive action may comprise a controlled stop or a triggered deceleration of the vehicle 1.

In other words, the preventive action may be triggered when the stability risk indicates that there may be a stability hazard, e.g., due to the predicted first vehicle motion and/or due to a high uncertainty of the predicted first vehicle motion.

In some examples, triggering the preventive action comprises determining the preventive action based on the predicted first vehicle motion and/or the first value.

In some examples, the preventive action is to trigger a stability control functionality of the vehicle 1.

The stability control functionality may be determined based on the predicted first vehicle motion and/or the first value, e.g., by mapping the predicted first vehicle motion and/or the first value to a specific stability control function based on a predefined mapping.

For example, the stability control functionality may comprise any one or more out of:
- triggering one or more suspensions of the vehicle 1 to counter a stability hazard, e.g., to counter a rollover-related stability hazard,
- triggering one or more brakes of the vehicle 1, e.g., to counter a yaw-related stability hazard,
- triggering steering of the vehicle 1, e.g., to counter a yaw-related stability hazard, jackknifing, or trailer swing, etc.
- triggering propulsion and/or torque vectoring of wheels of the vehicle 1, e.g., to counter a yaw-related stability hazard, jackknifing, or trailer swing, etc.

The preventive action may be triggered when the stability risk indicates a higher risk for a stability hazard, i.e., a higher likelihood that the stability hazard will occur in the future time period, than a stability risk needed for triggering the alert of action 204. In other words, for low to medium risks of a stability hazard, the alert may be triggered. For medium to high risks of stability hazards, the preventive action man be triggered. Alternatively, both the alert and preventive action may be triggered concurrently. For example, the second threshold may be higher than the first threshold.

### Further examples and variations

Examples herein may relate to a method built on a combination of the following steps where some may be omitted, e.g., depending on the application. Any of the below steps may be combined with any of the above actions. Any of the below steps may be used independently or in combination to predict the first vehicle motion, e.g., as part of action 201, and/or to establish the first value, e.g., as part of action 202.
**Step 1)**Performing a driver intention prediction based on traffic situation, e.g., detect any of a roundabout, overtaking, collision avoidance, and/or traffic jam and how a driver of the vehicle 1 may act accordingly, e.g., as part of using the driver model of action 201,
**Step 2)**Performing a driver behavior prediction based on a personalized driver model and historical data and intention of the driver, e.g., as part of using the driver model of action 201,
**Step 3)**Performing a driving environment estimation, e.g., including surface friction measurement estimation, wherein the estimation is performed either using on board sensors of the vehicle 1, or using data communicated from other vehicles and/or from predefined map data. The driving environment estimation may further comprise air, wind, or gust information, and bank information, e.g., incline of banks in the road 10., e.g., as part of estimating the environment data of action 201.
**Step 4)**Estimating vehicle model parameters of vehicle loading information, e.g., center of gravity location information and/or wheel base values, etc., e.g., as part of estimating the vehicle characteristics and/or load information of action 201.
**Step 5)**Predicting the first vehicle motion, e.g., considering a predicted driver behavior, vehicle dynamics and predicted environmental conditions e.g. tire-road friction, as well as an associated uncertainty in the final predicted first vehicle motion parameters, i.e., the first value. Step 5 may be part of predicting the first vehicle motion as in action 201, i.e., by using all of the above information from Steps 1-4, and establishing the first value as in action 202.
**Step 6)**Triggering interaction and/or intervention with driver, operator, remote operator, and/or co-driver or passenger of the vehicle 1 e.g., by triggering any of warnings, automatic brake, or active steering etc., e.g., as part of actions 204-205,
**Step 7)**Triggering interaction with other road users, e.g., by triggering any of warnings with sounds and lights or V2X broadcast to other vehicles or road users or infrastructure, e.g., as part of actions 204-205.

Steps 1-4 may be calculated in a way that an associated uncertainty e.g. covariance, is attached to each estimated vehicle motion parameter or estimated/predicted value or parameter. This may correspond to the second, third, fourth, and fifth values as described above in actions 201-202. These values are then considered in the overall motion prediction step 5 and/or action 201 such that the predicted first vehicle motion may include an associated overall uncertainty e.g., covariance, from all predicted vehicle motion parameters of the predicted first vehicle motion, e.g., longitudinal/lateral speed or acceleration.

The interactions of interventions in steps 6-7 may be affected by the level of uncertainty in the motion prediction, e.g. if the mean predicted lateral acceleration corresponds to a roll-over but when there is a large uncertainty associated with this, e.g., due to an untrained driver model, it may be determined to warn the driver, e.g., as in action 204, instead of making a brake intervention, e.g., as in action 205.

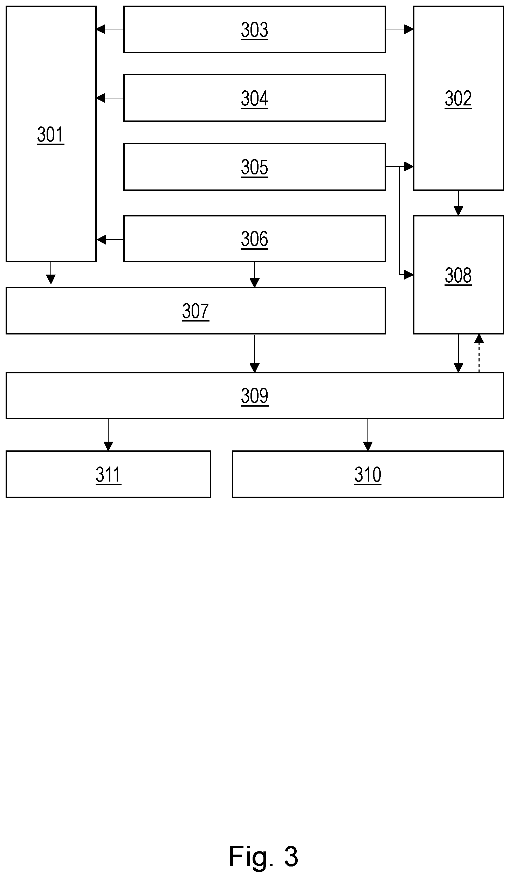

**FIG. 3** is a schematic block diagram according to an example which illustrates potential units, e.g., virtual or hardware units, that may perform the examples herein.

**A road condition estimation unit 301,** may be configured to estimate road condition, e.g., friction, banks of the road 10, and/or gust of air in the road 10 which may affect the vehicle motion in the future time period. The **road condition estimation unit 301** may be used to perform step 3 above or be used to estimate the environment data as in action 201. The road condition estimation unit 301 may base its estimation on a **predefined navigation map 303,** which indicates traffic and/or road information. The road condition estimation unit 301 may further base its estimation on **traffic situation information 304** as discussed in action 201, e.g., based on sensor data of the set of sensors 20, e.g., camera, Radar, and/or Lidar.

The road condition estimation unit 301 may further base its estimation on **motion sensor data 306** of the vehicle 1, e.g., comprising information of any one or more out of: position data of the vehicle 1 such as from GNSS, IMU measurements, and wheel speed sensor data.

The estimated road condition and the motion sensor data 306 may be fed to a vehicle model parameter estimation unit 307, e.g., for estimating vehicle model parameters such as the vehicle characteristics and/or the load information of the vehicle 1 according to action 201, e.g., vehicle loading information, center of gravity location information, and /or wheel base values of the vehicle 1.

A **driver intention prediction unit 302** may be configured to predict one or more driver inputs, e.g., the one or more third driver inputs as in action 201 based on the navigation map 303, the traffic situation information 304, and based on **cabin data 305,** e.g., comprising any one or more out of: video or images obtained from cabin camera inside the vehicle 1, pedal positions of the vehicle 1, steering torque and/or steering wheel angle.

The predicted one or more third driver inputs of the driver intention prediction unit 302 may be fed together with the cabin data 305 to a **driver model unit 308.** The driver model unit 308 may comprise the above-mentioned driver model which may be trained based on the one or more third driver inputs of the driver intention prediction unit 302 and the cabin data 305. The driver model unit 308 may be configured to predict the one or more second driver inputs, e.g., as in action 201.

The estimated vehicle model parameters may be fed together with the one or more second driver inputs to a **threat assessment unit 309.** The threat assessment unit 309 may predict the first vehicle motion and the first value, e.g., as in action 201. The predicted first vehicle motion and/or the first value may be fed back to the driver model unit 308 to use for training the driver model unit 308, e.g., the driver model as discussed in action 201.

The predicted first vehicle motion and the first value is fed to an intervention unit 310 and an alerting unit 311. When the predicted first vehicle motion and/or the uncertainty indicated by the first value indicates that a stability hazard may occur in the future, the intervention unit 310 may trigger automatic braking of the vehicle 1 and/or active steering of the vehicle 1. When the predicted first vehicle motion and/or the uncertainty indicated by the first value indicates that a stability hazard may occur in the future, the alerting unit 311 may trigger an alert to a driver or co-driver or passenger of the vehicle 1, and/or may trigger an alert to other road users than the vehicle 1.

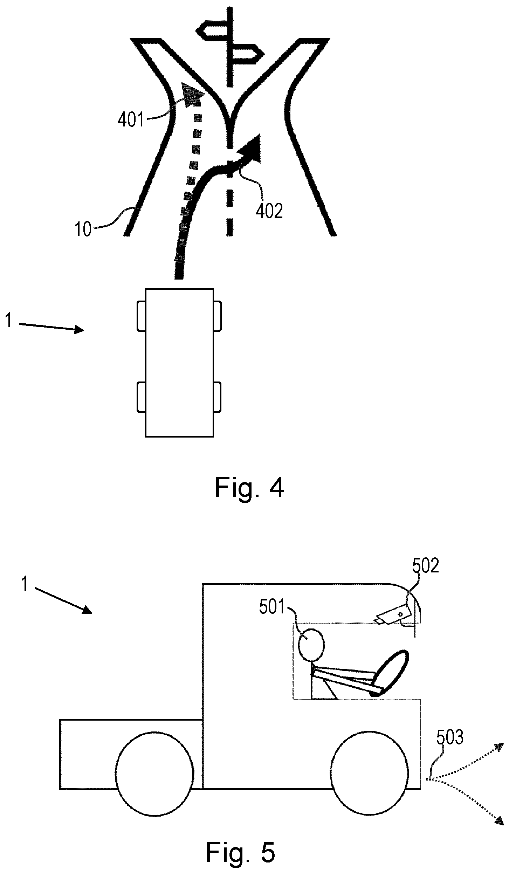

**FIG. 4** illustrates an example scenario of a driver intention prediction, e.g., the prediction of the one or more third driver input, which may be performed by combining traffic information and previous driver input to the vehicle 1, e.g., pedal position and/or steering wheel input and/or turning indicator information. For example, when there is an intersection in front the vehicle 1, there is a possibility that the driver will turn or move the vehicle 1 forward at the intersection. Combining with the driver inputs including vehicle indicator lights, steering, braking and e.g., a predefined destination of the vehicle 1, it may be possible to accurately predict if the vehicle 1 will turn to travel in the road 10 according to a **first driving direction 401** or according to a **second driving direction 402.**

Other traffic situation based intention prediction e.g., including obstacle avoidance, overtaking, lane changing, parking and/or docking may also be part of the prediction of the one or more third driver input.

**FIG. 5** illustrates an example scenario of a driver behavior prediction, e.g., the prediction of the one or more second driver input, which may be performed by combining a personalized driver model, e.g., the driver model discussed in action 201, and historical data, e.g., previous driver inputs and/or sensor data of the vehicle 1, and the driver intention prediction of FIG. 4, i.e., the one or more third driver inputs. The one or more second driver input may cause the vehicle 1 to follow different **trajectories 503.** A **camera 502** in a cabin of the vehicle 1 may be configured to monitor a **driver 501** of the vehicle 1 and may be used to identify the driver 501 and states of the driver 501, e.g., as discussed in action 201. States of the driver 501 may be classified as alerted, stressed, tired, distracted, etc. Behaviors of same driver 501, i.e., the one or more second driver input may differ under different states. The camera together with other sensors in the vehicle 1 may be used to detect the driver behavior. Such sensors, e.g., as part of the set of sensors 20, may include any one or more out of: a brake pedal position sensor, a steering angle sensor, and a steering torque sensor. A change of rate of said sensors may further also be used for detecting the driver behavior. The driver behavior may be logged and/or used to train and/or to correct the personalized driver model. The driver behavior may further be predicted with uncertainty, e.g., the second value, and by combining the driver behavior prediction with the predicted driver intention, the uncertainty of the driver behavior may be reduced.

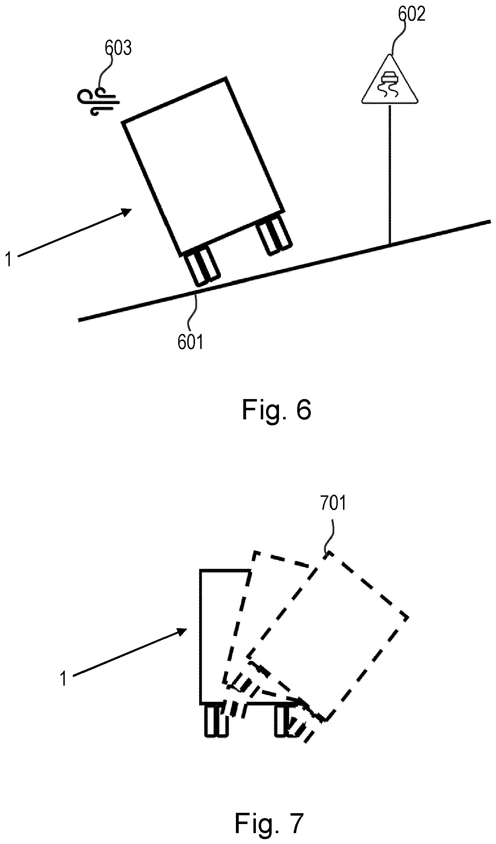

**FIG. 6** illustrates an example scenario of estimating a driving environment, i.e., the environment data as a in action 201.

The driving environment and/or the environment data may include any one or more out of:
- one or more road properties, e.g., a friction coefficient, a **bank angle indication 601,** and/or a **curvature indication 602,** wherein the one or more road properties are obtained e.g., by combining information from one or more sources, e.g., including on-board sensors of the vehicle 1, based on predefined map data, based on receiving from V2X communication, etc.
- Hazardous weather conditions, e.g., indication of one or more **air gusts 603,** indication of an avalanche, wherein predictions of the hazardous weather conditions may be obtained from a remote server or from a cloud service.

A vehicle model parameter estimation function may further be configured to estimate vehicle characteristics and/or load information and their uncertainties or variance, e.g., as in step 4 and/or action 201. Such parameters may include any one or more out of loading information of the vehicle 1, CoG location information of the vehicle 1, wheel base values of the vehicle 1, and effective wheel radius of the vehicle 1. Loading information of the vehicle 1 may include a total load and a load distribution, e.g., load on per vehicle unit, or load per axle or load per wheel. Loading information is usually measured, e.g., manually or by sensors on the vehicle 1. Some other parameters cannot be measured directly, such as CoG location information and effective wheel radius. Such parameters may instead be estimated with certain maneuvers of the vehicle 1, e.g., braking, accelerating, and/or cornering, and based on predefined heuristics.

**FIG. 7** illustrates an example scenario of a prediction of the first vehicle motion, e.g., by taking the predicted one or more second and/or third driver inputs, e.g. comprising any one or more out of predicted: steering wheel angle, accelerator and brake pedal position, and/or retarder stalk positions, over the coming prediction period, e.g., the future time period, typically in the region of 1-3 seconds, and passes these through a predefined mathematical model for the vehicle 1, typically also considering the estimated environment data, e.g., comprising any one or more out of: friction, road bank inclination, wind direction, and wind speed.

The outputs of the prediction of the first vehicle motion may comprise one or more vehicle motion parameters that are of relevance to vehicle stability for the vehicle 1, such that it may be detected if the vehicle 1 may potentially experience a **rollover 701** in the future time period. These one or more vehicle motion parameters may for example comprise longitudinal and/or lateral speed of the vehicle 1 or different vehicle units of the vehicle 1, e.g., tractor and trailer, lateral acceleration of different vehicle units, relative position of different vehicle units, and/or articulation angle between the different vehicle units. The uncertainty / variance in the inputs to the first vehicle motion, i.e., the first value may, as well as any of the above mentioned parameters, estimations or predictions, may be propagated in a way such that a variance of one or more vehicle motion parameters of the first vehicle motion is estimated. Any suitable technical approach may be used for this step, some are listed above or below.

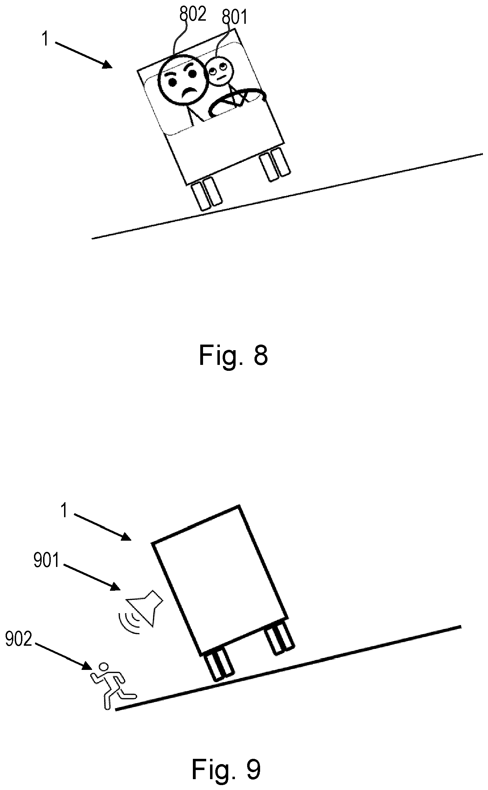

**FIG. 8** illustrates an example scenario of interaction and/or interventions with the vehicle 1, **driver 801, co-driver and/or passenger(s) 802** of the vehicle 1. Interactions, e.g., triggered alerts and/or preventive actions e.g., as in actions 204-205 may be made based on one or more vehicle motion parameters of the predicted first vehicle motion, in the upcoming 1-3 seconds, e.g., the future time period, as well as using their estimated variance / uncertainty, e.g., based on the first value. The one or more vehicle motion parameters, e.g., as defined with respect to FIG. 7, may be compared to what are judged as 'safe states' for the vehicle 1, e.g., to determine the stability risk, e.g., considering the specific upcoming road geometry and environmental conditions as part of the estimated environment data. Both mean and variance of the one or more vehicle motion parameters may be used to judge whether there is a high likelihood a loss of stability will occur in the future time period, e.g., as part of determining the stability risk as in action 203. A decision as to whether an automated intervention should be made, e.g. to trigger a preventive action such as automatic braking and/or steering as in action 205, or just to trigger an alert to warn a driver of the vehicle 1 will be made based on any one or more out of the metrics and/or parameters above

**FIG. 9** illustrates an example scenario of interaction with other road users on the road 10. If an imminent loss of stability is predicted that could result in an accident and/or the vehicle 1 exiting its current road lane, e.g., the stability risk of action 203 is above the first threshold, a warning could be made to other nearby **road users 902** such as by triggering the alert of action 204. This may be triggered in the form of lights on the vehicle 1, e.g. flashing hazard lights, and/or **audible warnings 901** e.g. by using speakers and/or a horn of the vehicle 1. If vehicle-2-vehicle (V2V) communication is available, the information may also be broadcast to nearby vehicles so they can take appropriate action, e.g., to increase a following distance.

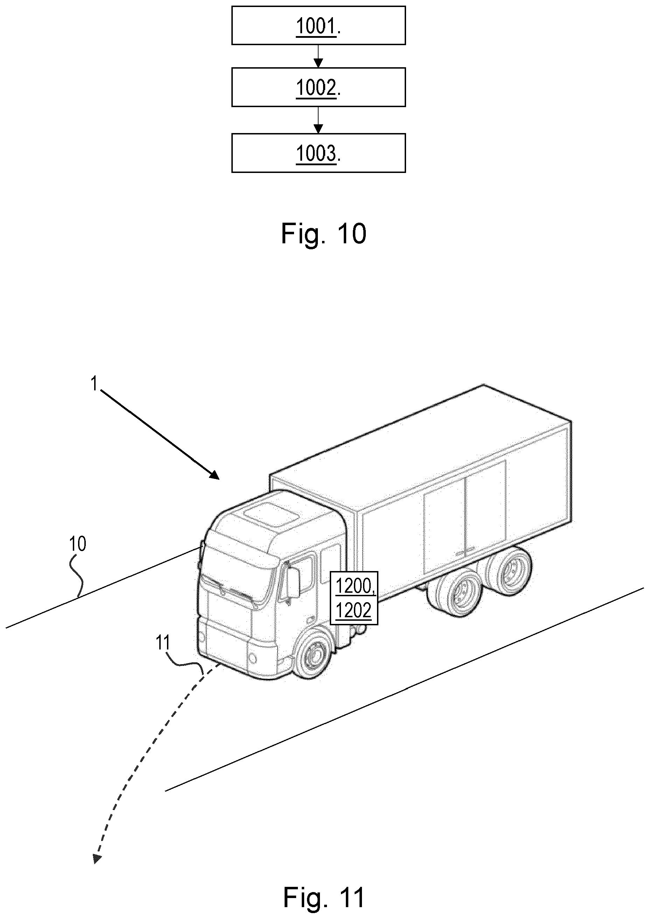

**FIG. 10** is a flow chart of a computer-implemented method for handling a stability risk of the vehicle 1 according to an example. The method comprises the following actions 1001-1003, which may be combined with any one or more out of the examples above in any suitable manner.

### Action 1001

The method comprises, by the processing circuitry 1202 of the computer system 1200, for a future time period, predicting a first vehicle motion of the vehicle 1.

The first vehicle motion is predicted based on any one or more out of:
- a traffic situation of a road 10 travelled by the vehicle 1,
- a driver model configured to predict one or more future inputs of a driver of the vehicle 1, based on previous one or more inputs of the driver and/or based on sensor data indicative of a state of the driver,
- an estimation of a driving environment of the vehicle 1, and
- an estimation of vehicle characteristics and/or load information of the vehicle 1.

### Action 1002

The method comprises, by the processing circuitry 1202 of the computer system 1200, for a future time period, establishing a first value indicative of an uncertainty of the predicted first vehicle motion.

### Action 1003

The method comprises, by the processing circuitry 1202 of the computer system 1200, for a future time period, determining a stability risk of the vehicle 1.

**FIG. 11** is another view of **FIG. 1****,** according to an example.

The computer system 1200 comprising the processing circuitry 1202 configured to handle a stability risk of the vehicle 1 is provided.

The processing circuitry 1202 is configured to, for a future time period, predict a first vehicle motion of the vehicle 1 and establish a first value indicative of an uncertainty of the predicted first vehicle motion.

The first vehicle motion being predicted based on any one or more out of:
- a traffic situation of the road 10 travelled by the vehicle 1,
- a driver model configured to predict one or more future inputs of a driver of the vehicle 1 based on previous one or more inputs of the driver and/or based on sensor data indicative of a state of the driver,
- an estimation of a driving environment of the vehicle 1, and
- an estimation of vehicle characteristics and/or load information of the vehicle 1.

The processing circuitry 1202 is configured to, based on the predicted first vehicle motion and the first value, determine a stability risk of the vehicle 1.

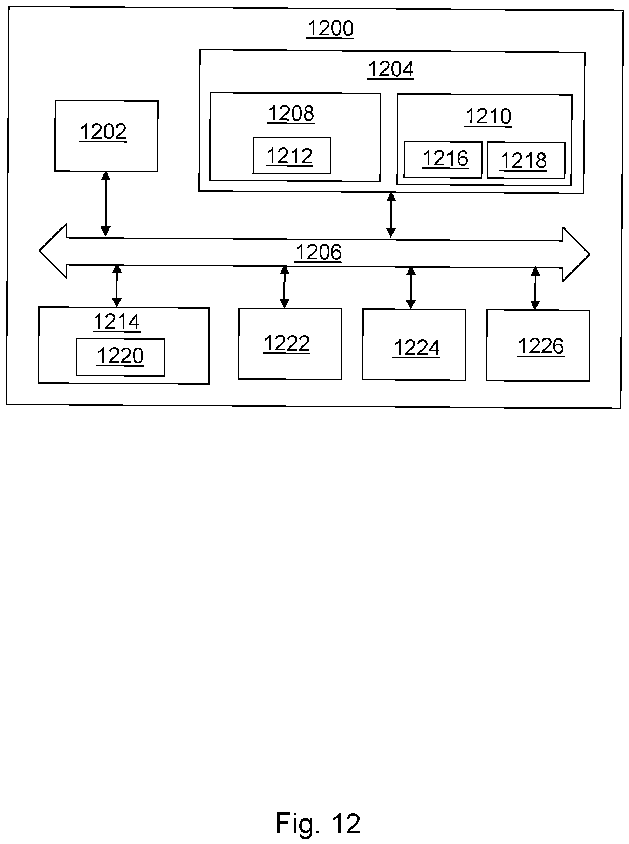

**FIG. 12** is a schematic diagram of a computer system **1200** for implementing examples disclosed herein. The computer system **1200** is adapted to execute instructions from a computer-readable medium to perform these and/or any of the functions or processing described herein. The computer system **1200** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1200** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1200** may comprise at least one computing device or electronic device capable of including firmware, hardware, and/or executing software instructions to implement the functionality described herein. The computer system **1200** may include processing circuitry **1202** (e.g., processing circuitry including one or more processor devices or control units), a memory **1204,** and a system bus **1206.** The computer system **1200** may include at least one computing device having the processing circuitry **1202.** The system bus **1206** provides an interface for system components including, but not limited to, the memory **1204** and the processing circuitry **1202.** The processing circuitry **1202** may include any number of hardware components for conducting data or signal processing or for executing computer code stored in memory **1204.** The processing circuitry **1202** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1202** may further include computer executable code that controls operation of the programmable device.

The system bus **1206** may be any of several types of bus structures that may further interconnect to a memory bus (with or without a memory controller), a peripheral bus, and/or a local bus using any of a variety of bus architectures. The memory **1204** may be one or more devices for storing data and/or computer code for completing or facilitating methods described herein. The memory **1204** may include database components, object code components, script components, or other types of information structure for supporting the various activities herein. Any distributed or local memory device may be utilized with the systems and methods of this description. The memory **1204** may be communicably connected to the processing circuitry **1202** (e.g., via a circuit or any other wired, wireless, or network connection) and may include computer code for executing one or more processes described herein. The memory **1204** may include non-volatile memory **1208** (e.g., read-only memory (ROM), erasable programmable read-only memory (EPROM), electrically erasable programmable read-only memory (EEPROM), etc.), and volatile memory **1210** (e.g., random-access memory (RAM)), or any other medium which can be used to carry or store desired program code in the form of machine-executable instructions or data structures and which can be accessed by a computer or other machine with processing circuitry **1202.** A basic input/output system (BIOS) **1212** may be stored in the non-volatile memory **1208** and can include the basic routines that help to transfer information between elements within the computer system **1200.**

The computer system **1200** may further include or be coupled to a non-transitory computer-readable storage medium such as the storage device **1214,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1214** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1214** and/or in the volatile memory **1210,** which may include an operating system **1216** and/or one or more program modules **1218.** All or a portion of the examples disclosed herein may be implemented as a computer program **1220** stored on a transitory or non-transitory computer-usable or computer-readable storage medium (e.g., single medium or multiple media), such as the storage device **1214,** which includes complex programming instructions (e.g., complex computer-readable program code) to cause the processing circuitry **1202** to carry out actions described herein. Thus, the computer-readable program code of the computer program **1220** can comprise software instructions for implementing the functionality of the examples described herein when executed by the processing circuitry **1202.** In some examples, the storage device **1214** may be a computer program product (e.g., readable storage medium) storing the computer program **1220** thereon, where at least a portion of a computer program **1220** may be loadable (e.g., into a processor) for implementing the functionality of the examples described herein when executed by the processing circuitry **1202.** The processing circuitry **1202** may serve as a controller or control system for the computer system **1200** that is to implement the functionality described herein.

The computer system **1200** may include an input device interface **1222** configured to receive input and selections to be communicated to the computer system **1200** when executing instructions, such as from a keyboard, mouse, touch-sensitive surface, etc. Such input devices may be connected to the processing circuitry **1202** through the input device interface **1222** coupled to the system bus **1206** but can be connected through other interfaces, such as a parallel port, an Institute of Electrical and Electronic Engineers (IEEE) 1394 serial port, a Universal Serial Bus (USB) port, an IR interface, and the like. The computer system **1200** may include an output device interface **1224** configured to forward output, such as to a display, a video display unit (e.g., a liquid crystal display (LCD) or a cathode ray tube (CRT)). The computer system **1200** may include a communications interface **1226** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples 1-20 which may be combined with any one or more of the above examples in any suitable order.

**Example 1.** A computer system 1200 comprising processing circuitry 1202
configured to handle a stability risk of a vehicle 1, the processing circuitry 1202 is configured to:
- for a future time period, predict a first vehicle motion of the vehicle 1 and establish a first value indicative of an uncertainty of the predicted first vehicle motion, the first vehicle motion being predicted based on any one or more out of:
- a traffic situation of a road 10 travelled by the vehicle 1,
- a driver model configured to predict one or more future inputs of a driver of the vehicle 1 based on previous one or more inputs of the driver and/or based on sensor data indicative of a state of the driver,
- an estimation of a driving environment of the vehicle 1, and
- an estimation of vehicle characteristics and/or load information of the vehicle 1; and
- based on the predicted first vehicle motion and the first value, determine a stability risk of the vehicle 1.

**Example 2.** The computer system 1200 of Example 1, wherein the processing circuitry 1202 is further configured to:
- in response to the stability risk of the vehicle 1 being within a first predefined interval such as above a first threshold, trigger an alert.

**Example 3.** The computer system 1200 of Example 2, wherein the alert is exterior to the vehicle 1 for alerting external road users, and/or wherein the alert is interior to the vehicle 1 for alerting a driver and/or a passenger of the vehicle 1.

**Example 4.** The computer system 1200 of any of Examples 1-3, wherein the processing circuitry 1202 is further configured to:
- in response to the stability risk of the vehicle 1 being within a second predefined interval such as above a second threshold, trigger a preventive action to be performed by the vehicle 1.

**Example 5.** The computer system 1200 of Example 4, wherein the processing circuitry 1202 is further configured to determine the preventive action based on the predicted first vehicle motion and/or the first value.

**Example 6.** The computer system 1200 of Example 4 or 5, wherein the preventive action is to trigger a stability control functionality of the vehicle 1.

**Example 7.** The computer system 1200 of any of Examples 1-6, wherein the processing circuitry 1202 is further configured to:
- obtain during a first time period, first sensor data indicative of a state of the driver, and/or previous one or more first inputs of the driver,
- using the driver model and based on the first sensor data and/or the previous one or more first inputs, predict one or more second driver inputs for the future time period, and establish a second value indicative of an uncertainty of the predicted one or more second driver inputs; and
wherein the processing circuitry 1202 is further configured to predict the first vehicle motion and/or to establish the first value based on the predicted one or more second driver inputs and/or the second value.

**Example 8.** The computer system 1200 of Example 6 or 7, wherein the processing circuitry 1202 is further configured to:
- obtain second sensor data and/or map information indicative of the traffic situation, and
- predict one or more third driver inputs based on the traffic situation for the future time period, and establish a third value indicative of the uncertainty of the predicted one or more third driver inputs,
- and wherein the processing circuitry 1202 is further configured to predict the one or more second driver inputs and/or to establish the second value based on the predicted one or more third driver inputs and/or the third value.

**Example 9.** The computer system 1200 of any of Examples 6-8, wherein the first sensor data comprises images and/or video of the driver, and wherein the processing circuitry 1202 is further configured to:
- classify a state of the driver based on the first sensor data, the state of the driver being indicative of a probability of one or more driver inputs to be made by the driver in the future time period, and
- predict the one or more second driver inputs and/or establish the second value based on the classified state of the driver.

**Example 10.** The computer system 1200 of any of Examples 1-9, wherein the processing circuitry 1202 is further configured to:
- estimate environment data of an expected future driving environment of the vehicle 1 for the future time period, and establish a fourth value indicative of the uncertainty of the estimated environment data,
wherein the environment data comprises any one or more out of:
- one or more banks and associated angles of the road 10 travelled by the vehicle 1,
- one or more slopes and associated angles of the road 10 travelled by the vehicle 1,
- a curvature of the road 10 travelled by the vehicle 1,
- a friction coefficient of the road 10 travelled by the vehicle 1, and
- weather condition of the road 10 travelled by the vehicle 1; and
wherein the estimation is based on any one or more out of:
- sensor data obtained from set of sensors 20 of the vehicle 1,
- map information of the road 10 travelled by the vehicle 1,
- sensor data and/or environment data communicated from at least one second road user and/or infrastructure of the road 10 travelled by the vehicle 1; and
wherein the processing circuitry 1202 is further configured to predict the first vehicle motion and/or to establish the first value based on the estimated environment data and/or the fourth value.

**Example 11.** The computer system 1200 of any of Examples 1-10, wherein the processing circuitry 1202 is further configured to:
- estimate vehicle characteristics and/or load information of the vehicle 1 for the future time period, and to establish a fifth value indicative of the uncertainty of the estimated vehicle characteristics and/or load information,
wherein the vehicle characteristics and/or load information comprises any one or more out of:
- load distribution of the vehicle 1,
- load per vehicle unit, axle. and/or wheel of the vehicle 1,
- effective wheel radius of the vehicle 1, and
- Center of Gravity, CoG, of the vehicle 1,
- and wherein the estimation is based on any one or more out of:
- one or more previous driver inputs,
- a motion of the vehicle 1,
- measurements from stationary facilities such as a scale in logistic terminal,
- a detected manoeuvre by the vehicle 1, and
previous vehicle characteristics and/or load information;
wherein the processing circuitry 1202 is further configured to predict the first vehicle motion and/or to establish the first value based on the estimated vehicle characteristics and/or load information of the vehicle 1 and/or the fifth value.

**Example 12.** The computer system 1200 of any of Examples 1-11, wherein the first value indicates a probability of that a future motion of the vehicle 1 aligns with the predicted first vehicle motion.

**Example 13.** The computer system 1200 of any of Examples 1-12, wherein the processing circuitry 1202 is further configured to:
- predict at least two vehicle motions of the vehicle 1 for the future time period,
- for each vehicle motion out of the at least two vehicle motions, estimate a respective probability of that the respective vehicle motion aligns with a future vehicle motion of the vehicle 1, and
wherein the processing circuitry 1202 is configured to:
- predict the first vehicle motion of the vehicle 1 and/or to establish the first value based on the predicted at least two vehicle motions and/or the probabilities of the at least two vehicle motions.

### Example 14. A vehicle 1 comprising the computer system 1200 of any of Examples 1-13.

**Example 15.** A computer-implemented method for handling a stability risk of a vehicle 1, the method comprising:
- by processing circuitry 1202 of a computer system 1200, for a future time period, predicting 201, 1001 a first vehicle motion of the vehicle 1 and establishing 202, 1002 a first value indicative of an uncertainty of the predicted first vehicle motion, the first vehicle motion being predicted based on any one or more out of:
   - a traffic situation of a road 10 travelled by the vehicle 1,
   - a driver model configured to predict one or more future inputs of a driver of the vehicle 1, based on previous one or more inputs of the driver and/or based on sensor data indicative of a state of the driver,
   - an estimation of a driving environment of the vehicle 1, and
   - an estimation of vehicle characteristics and/or load information of the vehicle 1; and
- by the processing circuitry 1202, based on the predicted first vehicle motion and the first value, determining 203, 1003 a stability risk of the vehicle 1.

**Example 16.** The method of Example 15, further comprising:
- by the processing circuitry 1202, in response to the stability risk of the vehicle 1 being within a first predefined interval such as above a first threshold, triggering 204 an alert.

**Example 17.** The method of Example 15 or 16, further comprising:
- by the processing circuitry 1202, in response to the stability risk of the vehicle 1 being within a second predefined interval such as above a second threshold, triggering 205 a preventive action to be performed by the vehicle 1.

**Example 18.** The method of any of Examples 15 or 17, wherein predicting 201 the first vehicle motion of the vehicle 1 and/or establishing 202, 1002 the first value further comprises:
- by the processing circuitry 1202, predicting at least two vehicle motions of the vehicle 1 for the future time period,
- by the processing circuitry 1202, for each vehicle motion out of the at least two vehicle motions, estimating a respective probability of that the respective vehicle motion aligns with a future vehicle motion of the vehicle 1, and
predicting 201 the first vehicle motion of the vehicle 1 and/or establishing 202, 1002 the first value based on the predicted at least two vehicle motions and/or the probabilities of the at least two vehicle motions.

**Example 19.** A computer program product comprising program code for performing, when executed by the processing circuitry 1202, the method of any of Examples 15-18.

**Example 20.** A non-transitory computer-readable storage medium comprising instructions, which when executed by the processing circuitry 1202, cause the processing circuitry 1202 to perform the method of any of claims 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1200) comprising processing circuitry (1202) configured to handle a stability risk of a vehicle (1), the processing circuitry (1202) is configured to:
- for a future time period, predict a first vehicle motion of the vehicle (1) and establish a first value indicative of an uncertainty of the predicted first vehicle motion, the first vehicle motion being predicted based on any one or more out of:
- a traffic situation of a road (10) travelled by the vehicle (1),
- a driver model configured to predict one or more future inputs of a driver of the vehicle (1) based on previous one or more inputs of the driver and/or based on sensor data indicative of a state of the driver,
- an estimation of a driving environment of the vehicle (1), and
- an estimation of vehicle characteristics and/or load information of the vehicle (1); and
- based on the predicted first vehicle motion and the first value, determine a stability risk of the vehicle (1).

2. The computer system (1200) of claim 1, wherein the processing circuitry (1202) is further configured to:
- in response to the stability risk of the vehicle (1) being within a first predefined interval, trigger an alert.

3. The computer system (1200) of any of claims 1-2, wherein the processing circuitry (1202) is further configured to:
- in response to the stability risk of the vehicle (1) being within a second predefined interval, trigger a preventive action to be performed by the vehicle (1).

4. The computer system (1200) of claim 3, wherein the processing circuitry (1202) is further configured to determine the preventive action based on the predicted first vehicle motion and/or the first value.

5. The computer system (1200) of any of claims 1-4, wherein the processing circuitry (1202) is further configured to:
- obtain during a first time period, first sensor data indicative of a state of the driver, and/or previous one or more first inputs of the driver,
- using the driver model and based on the first sensor data and/or the previous one or more first inputs, predict one or more second driver inputs for the future time period, and establish a second value indicative of an uncertainty of the predicted one or more second driver inputs; and
wherein the processing circuitry (1202) is further configured to predict the first vehicle motion and/or to establish the first value based on the predicted one or more second driver inputs and/or the second value.

6. The computer system (1200) of claim 5, wherein the processing circuitry (1202) is further configured to:
- obtain second sensor data and/or map information indicative of the traffic situation, and
- predict one or more third driver inputs based on the traffic situation for the future time period, and establish a third value indicative of the uncertainty of the predicted one or more third driver inputs,
- and wherein the processing circuitry (1202) is further configured to predict the one or more second driver inputs and/or to establish the second value based on the predicted one or more third driver inputs and/or the third value.

7. The computer system (1200) of any of claims 5 - 6, wherein the first sensor data comprises images and/or video of the driver, and wherein the processing circuitry (1202) is further configured to:
- classify a state of the driver based on the first sensor data, the state of the driver being indicative of a probability of one or more driver inputs to be made by the driver in the future time period, and
- predict the one or more second driver inputs and/or establish the second value based on the classified state of the driver.

8. The computer system (1200) of any of claims 1-7, wherein the processing circuitry (1202) is further configured to:
- estimate environment data of an expected future driving environment of the vehicle (1) for the future time period, and establish a fourth value indicative of the uncertainty of the estimated environment data, and
wherein the processing circuitry (1202) is further configured to predict the first vehicle motion and/or to establish the first value based on the estimated environment data and/or the fourth value.

9. The computer system (1200) of any of claims 1-8, wherein the processing circuitry (1202) is further configured to:
- estimate vehicle characteristics and/or load information of the vehicle (1) for the future time period, and to establish a fifth value indicative of the uncertainty of the estimated vehicle characteristics and/or load information; and
wherein the processing circuitry (1202) is further configured to predict the first vehicle motion and/or to establish the first value based on the estimated vehicle characteristics and/or load information of the vehicle (1) and/or the fifth value.

10. The computer system (1200) of any of claims 1-9, wherein the first value indicates a probability of that a future motion of the vehicle (1) aligns with the predicted first vehicle motion.

11. The computer system (1200) of any of claims 1-10, wherein the processing circuitry (1202) is further configured to:
- predict at least two vehicle motions of the vehicle (1) for the future time period,
- for each vehicle motion out of the at least two vehicle motions, estimate a respective probability of that the respective vehicle motion aligns with a future vehicle motion of the vehicle (1), and
wherein the processing circuitry (1202) is configured to:
- predict the first vehicle motion of the vehicle (1) and/or to establish the first value based on the predicted at least two vehicle motions and/or the probabilities of the at least two vehicle motions.

12. A vehicle (1) comprising the computer system (1200) of any of claims 1-11.

13. A computer-implemented method for handling a stability risk of a vehicle (1), the method comprising:
- by processing circuitry (1202) of a computer system (1200), for a future time period, predicting (201, 1001) a first vehicle motion of the vehicle (1) and establishing (202, 1002) a first value indicative of an uncertainty of the predicted first vehicle motion, the first vehicle motion being predicted based on any one or more out of:
- a traffic situation of a road (10) travelled by the vehicle (1),
- a driver model configured to predict one or more future inputs of a driver of the vehicle (1), based on previous one or more inputs of the driver and/or based on sensor data indicative of a state of the driver,
- an estimation of a driving environment of the vehicle (1), and
- an estimation of vehicle characteristics and/or load information of the vehicle (1); and
- by the processing circuitry (1202), based on the predicted first vehicle motion and the first value, determining (203, 1003) a stability risk of the vehicle (1).

14. A computer program product comprising program code for performing, when executed by the processing circuitry (1202), the method of claim 13.

15. A non-transitory computer-readable storage medium comprising instructions, which when executed by the processing circuitry (1202), cause the processing circuitry (1202) to perform the method of claim 13.
